# EUROPÄISCHE PATENTSCHRIFT

(11) **EP 1 322 905 B1**
(45) Veröffentlichungstag und Bekanntmachung des Hinweises auf die Patenterteilung: **30.03.2005**
(21) Anmeldenummer: 01971986.3
(22) Anmeldetag: 31.08.2001
(51) Int. Cl.: G01B 5/00, G01B 5/008, G01B 7/008, G01B 11/00, G01B 21/04

(54) **KOORDINATENMESSGERÄT**
DEVICE FOR MEASURING CO-ORDINATES
APPAREIL DE MESURE DE COORDONNEES

(30) Priorität: 28.09.2000 DE 10048097
(43) Veröffentlichungstag der Anmeldung: 02.07.2003
(73) Patentinhaber: Carl Zeiss Industrielle Messtechnik GmbH, 73447 Oberkochen (DE)
(72) Erfinder: BOUCKY, Otto, 89518 Heidenheim (DE); SEITZ, Karl, 73447 Oberkochen (DE); WALTHER, Jörg, 89547 Gerstetten (DE)
(74) Vertreter: Henckell, Carsten
(86) Internationale Anmeldenummer: PCT/EP2001/010055
(87) Internationale Veröffentlichungsnummer: WO 2002/027264

(56) Entgegenhaltungen:
- WO-A-00/65305
- WO-A-88/07656
- DE-A- 3 629 689
- DE-A- 19 654 318
- US-A- 4 651 283

## Beschreibung

Die Erfindung betrifft ein Koordinatenmeßgerät mit einem über eine Mechanik in den drei Koordinatenrichtungen beweglichen Tastkopf, wobei die Position des Tastkopfes unmittelbar gegenüber einer Referenzstation gemessen wird.

Ein solches Koordinatenmeßgerät ist bereits aus der deutschen Offenlegungsschrift DE 36 29 689 bekannt. Hierin ist ein über einen Roboter in den drei Koordinatenrichtungen beweglicher Taster gezeigt. Die Position des Tasters wird von mehreren ortsfest aufgestellten Laser-Entfernungsmessern bestimmt,

Desweiteren ist aus der Veröffentlichungsschrift WO 88/07656 ein Koordinatenmeßgerät bekannt bei dem ein Tastkopf über eine auf dem Meßtisch des Koordinatenmeßgerätes geführte Portalmechanik in den Koordinatenrichtungen geführt wird. Die Position des Tastkopfes wird über Interferometer gegenüber einer ebenfalls auf dem Meßtisch befindlichen Referenzstation gemessen.

Ein ähnliches Koordinatenmeßgerät zeigt auch die US-Patentschrift US 4,621,926, in der ein Koordinatenmeßgerät mit einer Brückenmechanik gezeigt ist, wobei hierin die Position des Tastkopfes ebenfalls über drei Lasertracker bestimmt wird, die an einer Referenzstation vorgesehen sind.

Aus dem Magazin "Innovation, Das Magazin von Carl Zeiss, Spezial Forschung und Technologie Nummer 1", erschienen im April 1999 bei der Firma Carl Zeiss ist auf Seite 5 ein sogenanntes "Laser-Kohärenz-µ-Global Postioning System" beschrieben, mit dem in einem Koordinatenmeßgerät unmittelbar die Position des über eine Hexapodenmechanik beweglichen Tastkopfes gemessen werden kann. Das "Laser-Kohärenz-µ-Global Postioning System" umfaßt dazu einen im Bereich des Tastkopfes angeordneten Sender der gleichzeitig als Empfänger fungiert und Lasersignale aussendet, die von mehreren Reflektoren mit genau bekannter Position an einer ortsfesten Referenzstation reflektiert werden. Über hochpräzise optische Laufzeitmessung kann die Position des Senders und damit des Tastkopfes im Meßraum ermittelt werden.

Die Besonderheit der Koordinatenmeßgeräte ist darin zu sehen, daß Schwingungen, die von der Mechanik abgegeben werden unmittelbar auf das Werkstück und auf die Referenzstation übertragen werden können, so daß es zu Meßungenauigkeiten kommt.

Hiervon ausgehend liegt unserer Erfindung deshalb die Aufgabe zu Grunde ein Koordinatenmeßgerät anzugeben, mit dem Fehler durch Schwingungen möglichst gut vermieden werden können. Die Aufgabe wird durch die Merkmale des unabhängigen Anspruches 1 gelöst.

Die besonderen Vorteile einer derartigen Meßanordnung sind hierbei darin zu sehen, daß die Referenzstation gemeinsam mit dem Werkstück auf einem schwingungsgedämpften Meßtisch angeordnet ist, während die Mechanik zum Bewegen des Tastkopfes nicht auf dem Meßtisch angeordnet ist. Hierdurch können Schwingungen, die durch die Mechanik verursacht werden relativ gut sowohl vom Werkstück, wie auch von der Referenzstation entkoppelt werden. Die Restschwingungen, die dennoch auf den Meßtisch übertragen werden, werden sowohl auf das Werkstück, wie auch auf die Referenzstation übertragen, so daß hierdurch etwaige Fehler weitestgehend kompensiert werden können.

Bei einem Meßsystem zur Messung der Position des Tastkopfes kann es sich um unterschiedliche Systeme handeln, wie Sie auch eingangs in der Beschreibungseinleitung beschrieben wurden. Es könnte zum Beispiel das eingangs beschriebene "Local-Kohärenz-µ-Global Positioning System" verwendet werden, wie es auf Seite 5 des Magazins "Innovation, Das Magazin von Carl Zeiss, Spezial Forschung und Technologie Nummer 1", erschienen im April 1999 bei der Firma Carl Zeiss beschrieben ist. Hierbei werden, wie oben beschrieben, von einem Sender, der in der Nähe des Tastkopfes angeordnet ist, Lasersignale ausgesendet. Die Lasersignale werden dann von an der Referenzstation befestigten Reflektoren reflektiert und vom Sender, der auch gleichzeitig als Empfänger dient wieder aufgenommen, wobei aus den Laufzeitunterschieden der reflektierten Signale die aktuelle Position berechnet wird.

Es kann jedoch genauso gut ein Photogrammetriesystem verwendet werden, bei dem von der Referenzstation aus über mehrere Kameras eine Marke auf dem Tastkopf aufgezeichnet wird und aus den aufgezeichneten Bildern über die Trigonometrischen Beziehungen zwischen der Marke und den Videokameras die Position der Marke im Meßraum berechnet wird. Außerdem könnte auch ein sogenannter "3-D Localizer" verwendet werden, bei dem mehrere über eine Fläche im Bereich des Tastkopfes verteilte Leuchtdioden, die in unterschiedlicher Wellenlänge Strahlung aussenden von mehreren Videokameras auf der Referenzstation beobachtet werden und aus den Videobildem ebenfalls über trigonometrische Beziehungen die Position des Tastkopfes berechnet wird.

Natürlich können auch die Komponenten vertauscht angeordnet werden. Beispielsweise kann der Lichtsender und Empfänger beim "Local-Kohärenz-µ-Global Positioning System" auch an der Referenzstation angeordnet sein und die Reflektoren am Tastkopf.

Auch die Schwingungsdämpfer können unterschiedlich sein. Im einfachsten Fall handelt es sich um Gummiklötze. Es können jedoch auch wirksamere Dämpfer, wie Flüssigkeitsstoßdämpfer vorgesehen werden.

Der Meßtisch kann wie üblich ein einteiliger Tisch sein, der beispielsweise aus Granit oder Stahl hergestellt ist. Es kann sich jedoch auch nur um ein Gestell handeln. Dies hat den besonderen Vorteil, daß die Mechanik in einem Zwischenraum des Meßtisches angeordnet werden kann.

Die Mechanik kann ebenfalls unterschiedlich ausgestaltet sein und muß letztlich zumindest geeignet sein den Tastkopf in den drei Koordinatenrichtungen zu bewegen. Es kann sich beispielsweise um Mechaniken mit Linearführungen handeln, wie beispielsweise eine Brückenmechanik, eine Portalmechanik oder eine Ständermechanik. Zusätzlich kann die Mechanik auch noch eine sogenannte Dreh-Schwenkeinheit aufweisen, über die der Tastkopf mit dem Meßarm des Mechanik verbunden ist und über die zusätzlich die Orientierung des Tastkopfes in den drei Raumwinkeln verändert werden kann. Es können natürlich auch Mechaniken vorgesehen werden, die nur Drehgelenke aufweisen, wie beispielsweise Roboterarme. Hierdurch kann besonders vorteilhaft sowohl der Tastkopf in den drei Raumrichtungen bewegt werden, wie auch die Orientierung des Tastkopfes in den drei Raumwinkeln verändert werden.

Auch der Tastkopf kann selbstverständlich vollkommen unterschiedlich sein. Es kann sich beispielsweise um einen sogenannten schaltenden Tastkopf handeln, der ein Signal abgibt, sobald der hieran befestigte Taststift das Werkstück berührt. Es kann sich jedoch genauso auch um einen messenden Tastkopf handeln, der die Auslenkung eines Taststiftes in den drei Koordinatenrichtungen gegenüber dem Tastkopfgehäuse mißt oder um einen optischen Tastkopf, wie beispielsweise einen Lasertriangulationstaster, bei dem ein Laserstrahl auf die Werkstückoberfläche projiziert wird und der reflektierte Strahl unter einem Winkel von einer Videokamera beobachtet wird und aus der Position des reflektierten Strahls der Abstand zur Werkstückoberfläche bestimmt wird.

Es können gleichfalls auch mehrere Mechaniken vorgesehen werden, so daß hierdurch größere Werkstücke mit einer Vielzahl von zu messenden Merkmalen gemessen werden können.

Besonders Vorteilhaft werden für jede Mechanik mehrere Referenzstationen vorgesehen, gegenüber denen alternativ die Position des Tastkopfes der betreffenden Mechanik in Abhängigkeit von der jeweiligen Stellung im Meßraum gemessen werden kann. Dies hat den Vorteil, daß das aufgrund der spezifischen Positionsmessung meist sehr geringe Meßvolumen, innerhalb dessen die Position des Tastkopfes gemessen werden kann auf ein wesentlich größeres Meßvolumen erweitert werden kann.

Besonders vorteilhaft kann das Koordinatenmeßgerät hierbei so-susgestaltet werden, daß die Referenzstationen auswechselbar am Meßtisch befestigt werden können. Hierdurch, kann ganz spezifisch für die jeweilige Meßaufgabe angepaßt an einer geeigneten Stelle eine Referenzstation angeordnet werden. Dies weist den besonderen Vorteil auf, daß trotz eines relativ großen möglichen Meßvolumens nur wenige der nicht ganz billigen Referenzstationen benötigt werden.

Dazu sollte die Referenzstation besonders vorteilhaft über eine hochgenau reproduzierbare Wechselhalterung befestigbar sein, die ähnlich denjenigen Wechselhalterungen aufgebaut ist, wie sie heute üblicherweise zum Auswechseln von Taststiften in der Koordinatenmeßtechnik verwendet werden.

Weitere Vorteile und Weiterbildungen der Erfindung ergeben sich aus der Figurenbeschreibung. Hierin zeigen:
- Figur 1:: schematische Zeichnung eines erfindungsgemäßen Koordinatenmeßgerätes in der Seitenansicht;
- Figur 2:: perspektivische Darstellung eines Referenzkörpers (18)
- Figur 3 :: Aufsicht auf eine weitere Ausführungsform eines erfindungsgemäßen Koordinatemmeßgerätes mit vier Meßeinheiten (2)
- Figur 4:: Wechseleinrichtung (25) mit der eine Referenzstation (4) auswechselbar gehalten werden kann

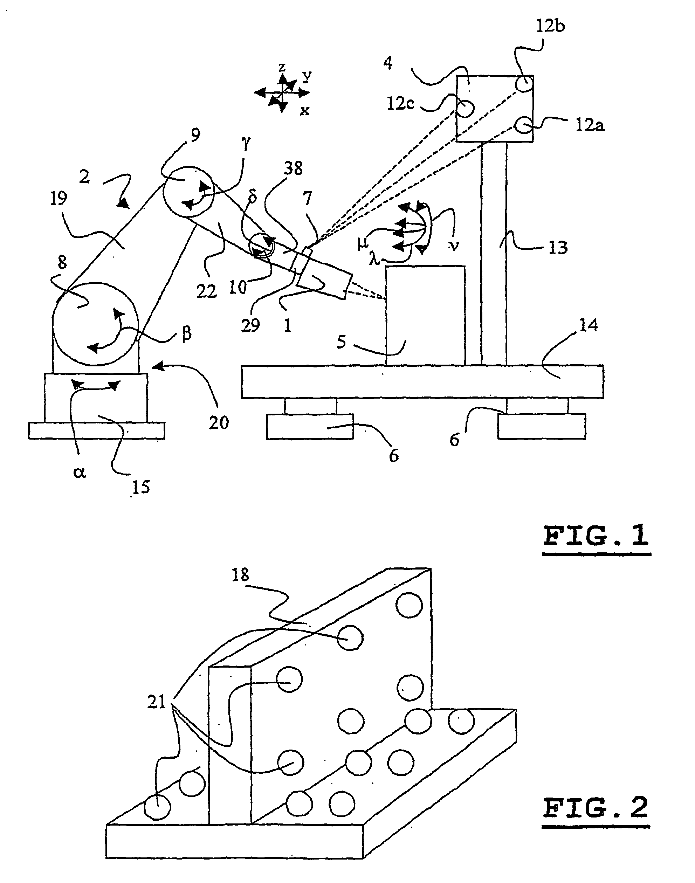

Figur 1 zeigt eine schematische Darstellung einer ersten Ausfuhrungsvariante eines erfindungsgemäßen Koordinatenmeßgerätes. Wesentlicher Bestandteil des Koordinatenmeßgerätes ist hierbei die Mechanik (2), über die ein optischer Tastkopf (1) in den drei Koordinatenrichtungen (x, y und z) bewegt werden kann. Der optische Tastkopf (1) ist dazu als Lasertriangulationstaskopf ausgebildet, der den Abstand zwischen der Werkstückoberfläche und dem Tastkopf bestimmt, indem ein Laserstrahl auf die Werkstückoberfläche projiziert wird und der reflektierte Strahl von einer Videokamera im Tastkopf unter einem Winkel beobachtet wird. Aus der Position des reflektierten Laserstrahls auf dem Videobild kann dann der Abstand berechnet werden.

Um den optischen Tastkopf (1) zu bewegen weist die Mechanik (2) drei Gelenkarme (19), (22), (29) auf, die jeweils über motorisch angetriebene Drehgelenke (8), (9) und (10) um entsprechende horizontal ausgerichtete Drehachsen um die Drehwinkel (β, γ, δ) rotiert werden können. Die gesamte Mechanik (2) ist außerdem über ein Drehgelenk (20) gegenüber der Basis (15) um eine vertikal ausgerichtete Drehachse um den Drehwinkel (α) verschwenkbar. Hierüber kann der Tastkopf (1) in den drei Raumrichtungen (x,y,z) bewegt werden.

Zusätzlich ist der Gelenkarm (29) noch über wenigstens zwei weitere Drehgelenke mit dem Drehgelenk (10) verbunden, die hier der Übersichtlichkeit halber rein schematisch als Baugruppe (38) dargestellt ist. Die Drehachsen dieser drei Drehgelenke stehen jeweils senkrecht aufeinander, so daß zusätzlich die Orientierung des Tastkopfes (1) in den drei Raumwinkeln (λ,µ,ν) verändert werden kann.

Die Position des optischen Sensors (1) wird nun nicht, wie bei heute gängigen Koordinatenmeßgeräten üblich, über entsprechende Maßstäbe bzw. Drehgeber in den Drehgelenken (8, 9, 10, 20 und 37) bestimmt sondern unmittelbar am Gelenkarm (29), der starr mit dem Tastkopf(1) verbunden ist. Hierdurch kann absolut die Position des optischen Tastkopfes (1) bestimmt werden ohne die Fehler, die sich beispielsweise aufgrund der Verbiegung der Gelenkarme (19), (22) und (29) ergeben oder aufgrund der Laufabweichungen der Drehgelenke (8, 9, 10, 20 und 37) ergeben in Kauf nehmen zu müssen. Die Position des Gelenkarmes (29) wird hierbei gegenüber einer ortsfesten Referenzstation (4) gemessen. Die Messung erfolgt hierbei über ein sogenanntes "Laser-Kohärenz-µ-Global Positioning System", bei dem ein am Gelenkarm (29) vorgesehener Sender und Empfänger (7) Lasersignale aussendet, die von drei kugelsegmentförmigen Reflektoren (12a, 12b, 12c) auf der Referenzstation (4) zurück reflektiert werden und im Gelenkarm (29) durch den Sender und Empfänger (7) empfangen werden, wobei durch hochpräzise Laufzeitmessung die Position des Senders und Empfängers (7) in dem durch die bekannten Positionen der Reflektoren (12a, 12b, 12c) erzeugten Koordinatensystem bestimmt werden. Natürlich könnte an Stelle dessen auch ein photogrammetrisches Verfahren verwendet werden, bei dem an Stelle der Reflektoren (12a, 12b, 12c) drei Videokameras auf der Referenzstation (4) angeordnet sind und eine Marke, wie beispielsweise ein Kreuz, auf dem Gelenkarm (29) aufzeichnen und aus der jeweiligen Bildposition dieser Marke auf den drei Videobildern die genaue Position des Gelenkarms (29) im Maschinenkoordinatensystem berechnet wird. Außerdem könnte auch ein sogenannter "3-D Localizer" verwendet werden, bei dem mehrere flächig über den Gelenkarm (29) verteilte Leuchtdioden, die in unterschiedlicher Wellenlänge Strahlung aussenden von mehreren Videokameras auf der Referenzstation (4) beobachtet werden und aus den Videobildern ebenfalls Über trigonometrische Beziehungen die Position des Tastkopfes (1) ausgerechnet wird.

Um nunmehr in erfindungsgemäßer Weise Meßungenauigkeiten zu verhindern, die durch Schwingungen hervorgerufen werden, wird die bewegliche Mechanik (2) unabhängig vom . Meßtisch (14) aufgestellt, d.h. sie wird nicht auf dem Meßtisch gelagert, während die Referenzstation (4) mit den drei Reflektoren (12a, 12b, 12c) gemeinsam mit dem zu vermessenden Werkstück (5) auf den Meßtisch (14) angeordnet ist, der wiederum gegenüber dem darunterliegenden Fundament über Schwingungsdämpfer (6) schwingungsgedämpft gelagert ist Hierdurch ergibt sich der besondere Vorteil, daß Schwingungen, die durch die Bewegung der Mechanik (2) verursacht werden nur in sehr geringem Umfang auf den Meßtisch (14) und somit auf das hierauf gelagerte Werkstück (5) übertragen werden, weil der Werkstücktisch (14) über Schwingungsdämpfer (6) auf dem Fundament gelagert ist Das gleiche gilt auch für die Referenzstation (4), die aufgrund der Schwingungsdämpfer (6) ebenfalls nahezu keine Schwingungen ausführt. Sollten dennoch Schwingungen in den Meßtisch (14) eingekoppelt werden, so vollführt die Referenzstation (4) bedingt durch die starre Kopplung zum Meßtisch (14) nahezu dieselben Schwingungen wie das zu vermessende Werkstück (5), so daß auch hieraus keine größeren Fehler resultieren können.

Das gezeigte Meßsystem schafft auf Grund seiner optischen Eigenschaften nur ein begrenztes Meßvolumen mit hoher Genauigkeit Da dieses begrenzte Meßvolumen für viele Anwendungen nicht ausreichend ist, kann durch Hinzufügen von weiteren Referenzstationen (4) bzw. von weiteren Reflektoren zu den bereits bestehenden Reflektoren (12a, 12b, 12c) ein zusammenhängendes hinreichend großes Meßsystem oder mehrere nicht zusammenhängende Meßsysteme geschaffen werden. Ein großes zusammenhängendes Meßsystem mit einem großen Meßvolumen wird dann gebraucht, wenn zu messende Merkmale über ein größeres Werkstück (5) verteilt sind. Nicht zusammenhängende Meßsysteme sind dann von Vorteil, wenn am Werkstück begrenzte Sektoren mit Merkmalen vorliegen. In jedem Fall müssen die Positionen der Referenzstationen (4) bzw. der hierauf befindlichen Reflektoren (12a, 12b, 12c) oder beim Einsatz eines Photogrammetriesystems die Kamerazonen zueinander vermessen und in Bezug gebracht werden. Dies kann durch präzise Vermessung mittels geodätischer Instrumente oder Lasertrackern oder durch die Einbringung und Vermessung eines einzigen hinreichend großen Referenzkörpers bekannter Geometrie erreicht werden, wie dies beispielsweise in Figur 2 gezeigt ist. Der hierin gezeigte Referenzkörper (18) ist über eine große Länge hinweg mit einer Vielzahl von Kugeln (21) ausgestattet. Der Abstand der Kugeln (21) zueinander auf dem Referenzkörper (18) ist hierbei hochgenau bekannt und beispielsweise über ein herkömmliches Koordinatenmeßgerät vermessen worden. Werden nun mehrere Kugeln (21) auf dem Referenzkörper (18) im jeweiligen Bereich von mehreren Referenzstationen (4) mit dem Sensor vermessen, kann damit die Position und Lage der Referenzstationen (4) zueinander bestimmt werden.

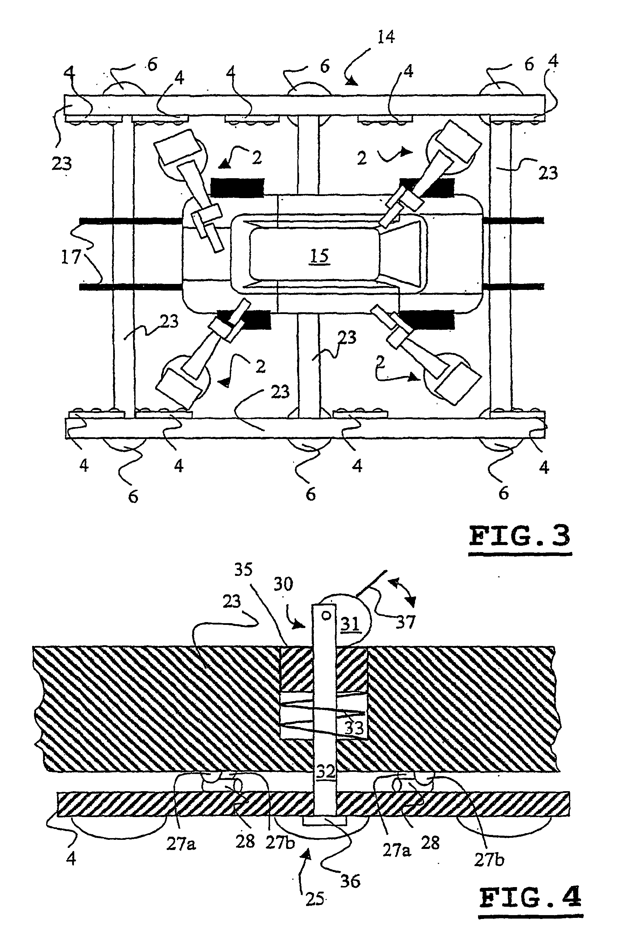

Figur 3 zeigt eine weitere Ausführungsform eines erfindungsgemäßen Koordinatenmeßgerätes in der Aufsicht. Wie hierin zu sehen, handelt es sich um ein gegenüber Figur 1 erheblich größeres Werkstück (15) in der Form einer Automobilkarosserie, die über eine Zufubreinnchtung (17), wie beispielsweise ein Förderband, auf dem Meßtisch (14) zugeführt wird. Der Meßtisch (14) ist in dem hierin gezeigten Ausführungsbeispiel aus mehreren Trägern (23) als Rahmengestell aufgebaut und über sechs Schwingungsdämpfer (6) auf dem Fundament gelagert. Außerdem sind vier unterschiedliche Mechaniken (2) vorgesehen, die vollkommen analog zu denjenigen der Figur (1) aufgebaut sind, wobei die Position der Gelenkarme (29) jeweils gegenüber den an unterschiedlichen Stellen angebrachten Referenzstationen (4) bestimmt wird.

Die Referenzstationen (4) können hierbei über hochgenau reproduzierbare Wechselhalterungen an verschiedenen Positionen an den seitlichen Trägern (23) des Meßtisches (14) befestigt werden. Hierdurch kann in Abhängigkeit von der jeweils durchzuführenden Meßaufgabe für das jeweilig gewünschte Meßvolumen die Referenzstation (4) an einer geeigneten Stelle befestigt werden.

Die Befestigung geschieht über eine Wechselhalterung (25), wie sie in Figur 4 gezeigt ist, wobei in den Trägern (23) eine Vielzahl von derartigen Wechselhalterungen (25) vorgesehen sind.

Figur 4 zeigt eine Aufsicht auf einen seitlichen Träger (23), wobei der Träger (23) aufgeschnitten dargestellt ist. Die Wechselhalterung (25) weist hierbei ein Dreipunktlager auf, das drei am Träger (23) angebrachte Kugelpaare (27a,27b) umfaßt, die Sternförmig in einem Winkel von 120° zueinander am Träger (23) angeordnet sind, sowie drei als Gegenlager fungierende Zylinder (28), die an der Referenzstation (4) angeordnet sind und auf den drei Kugelpaaren (27a,27b) entsprechend aufliegen. Von den drei Zylindern (28) bzw. Kugelpaaren (27a,27b) sind wegen des Schnittes nur zwei zu sehen. Außerdem weist die Wechseleinrichtung eine Spanneinheit (30) auf, die die Referenzstation (4) mit reproduzierbarer Kraft gegen das Dreipunktlager spannt. Die Spanneinheit (30) umfaßt in diesem Fall einen Stift (32) an dessen Ende ein quaderförmiges Endstück (36) befestigt ist, das genau durch ein entsprechendes Langloch in der Referenzstation (4) paßt, dessen Längsachse lotrecht zur Zeichenebene ausgerichtet ist. Das andere Ende des Stiftes (32) ist drehbeweglich an einem Exzenter (31) mit Betätigungshebel (37) befestigt. Der Exzenter (31) stützt sich auf einem in einer Aussparung im Träger (23) beweglich geführten Bauteil (35) ab, wobei die Druckfeder (33) das Bauteil (35) gegenüber dem Träger (23) vorspannt.

Das Aufnehmen einer Referenzstation (4) durch die Wechselhalterung (25) sieht hierbei derart aus, daß das Endstück (36) durch das Langloch in der Referenzstation (4) durchgeführt wird und die Referenzstation (4) nach dem Durchführen dann um 90° gedreht wird, so daß das Endstück (36) nunmehr auf der Außenseite der Referenzstation aufliegt, wie Figur 4 dies zeigt In einem nächsten Schritt wird der Betätigungshebel (37) im Uhrzeigersinn bewegt, so daß hierdurch der Stift (32) und somit die Referenzstation (4) in Richtung auf den Träger (23) gespannt wird und zwar gegen die Federkraft der Druckfeder (33). Der Betätigungshebel (37) wird hierbei solange betätigt, bis dieser auf dem Träger (23) aufliegt Hierdurch wird immer eine eindeutige Stellung des Exzenters (31) vorgegeben, so daß hierdurch auch die Druckkraft, mit der die Druckfeder (33) dann die Referenzstation (4) gegen das Dreipunktlager zieht, hochgenau reproduzierbar ist.

Natürlich können auch andere heute übliche Wechselhalterungen verwendet werden. Beispielsweise gibt es Wechselhalterungen, bei denen mittels eines beweglichen Hakens, eines Magneten oder durch einen Saugnapf das zu spannende Teil gegen das Dreipunktlager gespannt wird.

## Patentansprüche

1. Koordinatenmessgerät mit
- einer Mechanik (2) und einem über diese Mechanik zumindest in den Koordinatenrichtungen (x,y,z) beweglichen Tastkopf (1),
- einem Messtisch (14), auf dem ein zu vermessendes Werkstück (5) gelagert wird und einer festen Referenzstation (4), die auf dem Messtisch gelagert ist und
- einem Messsystem, über das die Position des Tastkopfes unmittelbar gegenüber der festen Referenzstation (4) gemessen wird
**dadurch gekennzeichnet, dass**
- die Mechanik (2) unabhängig vom Messtisch (14) gelagert ist und
- der Messtisch (6) seinerseits auf wenigstens einem Schwingungsdämpfer (6) gelagert ist.

2. Koordinatenmeßgerät nach Anspruch 1 **dadurch gekennzeichnet, daß** der Meßtisch (14) wenigstens eine Durchbrechung aufweist, in der die Mechanik (2) zum Bewegen des Tastkopfes (1) angeordnet ist.

3. Koordinatenmeßgerät nach einem der Ansprüche 1 oder 2, **dadurch gekennzeichnet, daß** der Mechanik (2) wenigstens zwei unterschiedliche Referenzstationen (4) zuordenbar sind, gegenüber denen die Position des Tastkopfes (1) gemessen werden kann.

4. Koordinatenmeßgerät nach Anspruch 3, **dadurch gekennzeichnet, daß** die Referenzstationen (4) über eine Wechselhalterung (25) auswechselbar am Meßtisch (14) befestigt werden können.

5. Koordinatenmeßgerät nach Anspruch 4, **dadurch gekennzeichnet, daß** die Wechselhalterung (25) eine Spanneinheit (30) aufweist, die die Referenzstation reproduzierbar gegen ein Dreipunktlager spannt

6. Koordinatenmeßgerät nach Anspruch 5, **dadurch gekennzeichnet, daß** die Spanneinheit (3 0) einen Exzenter (31) umfaßt, über den die Referenzstation (4) gegen die Federkraft einer Druckfeder (33) spannbar ist.

## Claims

1. Coordinate measuring machine having
- a mechanism (2) and a probe head (1) which can move at least in the coordinate directions (x, y, z) via this mechanism,
- a measuring table (14) on which a workpiece (5) to be measured is supported, and a fixed reference station (4) which is supported on the measuring table, and
- a measuring system via which the position of the probe head is directly measured in relation to the fixed reference station (4),
**characterized in that**
- the mechanism (2) is supported independently of the measuring table (14), and
- the measuring table (14) is, for its part, supported on at least one vibration damper (6).

2. Coordinate measuring machine according to Claim 1, **characterized in that** the measuring table (14) has at least one cutout in which the mechanism (2) for moving the probe head (1) is arranged.

3. Coordinate measuring machine according to one of Claims 1 or 2, **characterized in that** the mechanism (2) can be assigned at least two different reference stations (4) in relation to which the position of the probe head (1) can be measured.

4. Coordinate measuring machine according to Claim 3, **characterized in that** the reference stations (4) can be fastened exchangably on the measuring table (14) via an interchangeable holder (25).

5. Coordinate measuring machine according to Claim 4, **characterized in that** the interchangeable holder (25) has a clamping unit (30) which reproducibly clamps the reference station against a three-point bearing.

6. Coordinate measuring machine according to Claim 5, **characterized in that** the clamping unit (30) comprises an eccentric (31) via which the reference station (4) can be clamped against the spring force of a compression spring (33).

## Revendications

1. Appareil de mesure de coordonnées comprenant
- un mécanisme (2) et une tête de palpage (1) pouvant être déplacée par le biais de ce mécanisme au moins dans les directions des coordonnées (x, y, z),
- une table de mesure (14) sur laquelle est déposée une pièce à mesurer (5) ainsi qu'une station de référence fixe (4) sur laquelle repose la table de mesure et
- un système de mesure par le biais duquel est mesurée la position de la tête de palpage directement par rapport à la station de référence fixe (4)
**caractérisé en ce que**
- le mécanisme (2) est soutenu indépendamment de la table de mesure (14) et
- la table de mesure (14) de son côté repose sur au moins un amortisseur (6).

2. Appareil de mesure de coordonnées selon la revendication 1, **caractérisé en ce que** la table de mesure (14) présente au moins une traversée dans laquelle est disposé le mécanisme (2) destiné à déplacer la tête de palpage (1).

3. Appareil de mesure de coordonnées selon l'une des revendications 1 ou 2, **caractérisé en ce qu'**au mécanisme (2) peuvent être affectées au moins deux stations de référence (4) différentes par rapport auxquelles peut être mesurée la position de la tête de palpage (1).

4. Appareil de mesure de coordonnées selon la revendication 3, **caractérisé en ce que** les stations de référence (4) peuvent être fixées à la table de mesure (14) de manière à pouvoir être remplacées à l'aide d'un support interchangeable (25).

5. Appareil de mesure de coordonnées selon la revendication 4, **caractérisé en ce que** le support interchangeable (25) présente une unité de serrage (30) qui serre la station de référence de manière reproductible contre un support à trois points.

6. Appareil de mesure de coordonnées selon la revendication 5, **caractérisé en ce que** l'unité de serrage (30) comprend un excentrique (31) par le biais duquel la station de référence (4) peut être serrée à l'encontre de la force d'un ressort de compression (33).
